# FASCICULE DE BREVET EUROPEEN

(11) **EP 2 227 440 B1**
(45) Date de publication et mention de la délivrance du brevet: **08.07.2015**
(21) Numéro de dépôt: 08854789.8
(22) Date de dépôt: 07.11.2008
(51) Int. Cl.: C02F 1/32, A61L 2/10

(54) **PROCEDE ET DISPOSITIF DE TRAITEMENT D'UN EFFLUENT**
VERFAHREN UND VORRICHTUNG ZUR BEHANDLUNG EINES AUSTRAGSSTROMS
METHOD AND DEVICE FOR TREATING AN EFFLUENT

(30) Priorité: 13.11.2007 FR 0759002
(43) Date de publication de la demande: 15.09.2010
(73) Titulaire: SUD EST EAU PURE, 06000 Nice (FR)
(72) Inventeur: PICARD Alain, 38610 Gieres (FR)
(74) Mandataire: Dossmann, Gérard
(86) Numéro de dépôt international: PCT/FR2008/052014
(87) Numéro de publication internationale: WO 2009/068797

(56) Documents cités:
- WO-A-03/045835
- DE-U1-202006 019 492
- JP-A- 63 252 248

## Description

La présente invention concerne le domaine des traitements des effluents dans le but de rejeter des eaux dépolluées ou décontaminées vers par exemple les réseaux d'eaux usées.

De tels besoins se rencontrent pour le traitement de déchets hospitaliers issus en particulier d'analyseurs de biologie humaine ou animale, ou de déchets issus en particulier d'analyseurs de produits alimentaires, afin de détruire toutes sortes de polluants tels que bactéries, virus, moisissures ou champignons.

Le brevet FR-A-2 840 894 propose de traiter des effluents liquides d'une part au travers d'une cartouche de filtration et d'autre part en exposant ces effluents à un rayonnement lumineux ultraviolet, avec un simple stockage des effluents liquides dans une cuve intermédiaire de laquelle les effluents liquides sont évacués par une pompe. Le document WO 03/045835 A1 décrit un dispositif de traitement d'eau par rayonnement ultraviolet.

La présente invention a pour but de proposer un traitement amélioré et plus autonome des effluents liquides.

La présente invention a pour objet un procédé de traitement d'un effluent liquide, dans lequel cet effluent entre dans une enceinte.

Ce procédé comprend, séquentiellement, les étapes suivantes :
détecter un niveau intermédiaire de liquide dans l'enceinte ;
à la détection du niveau intermédiaire, commander une amenée d'un liquide de dilution dans l'enceinte ;
détecter un niveau haut de liquide dans l'enceinte ;
à la détection du niveau haut, arrêter l'amenée du liquide de dilution et commander une évacuation du fluide ;
détecter un niveau bas de liquide dans l'enceinte ;
à ou suite à la détection du niveau bas, arrêter l'évacuation du liquide ;
et, au cours de son évacuation, exposer, dans au moins un canal de traitement, le liquide évacué à un rayonnement lumineux.

Selon l'invention, le procédé peut comprendre l'étape suivante : évacuer, par le canal de traitement, le liquide à un niveau de trop plein supérieur au niveau haut et exposer le liquide de trop plein au rayonnement lumineux.

Selon l'invention, le procédé peut comprendre les étapes suivantes : commander une amenée secondaire du liquide de dilution dans l'enceinte à partir d'un niveau bas ;
détecter un niveau bas intermédiaire de liquide dans l'enceinte ;
à la détection du niveau bas intermédiaire, arrêter l'amenée secondaire du liquide de dilution.

Selon l'invention, l'arrêt de l'évacuation du liquide peut être décalé d'une durée déterminée par rapport à la détection du niveau bas.

La présente invention a également pour objet un dispositif de traitement d'un effluent liquide.

Ce dispositif comprend, une enceinte ; un conduit d'amenée de l'effluent liquide à traiter ; un conduit d'amenée d'un liquide de dilution sous pression, muni d'une électrovanne ; une sonde d'un niveau haut de liquide dans l'enceinte, une sonde d'un niveau intermédiaire de liquide dans l'enceinte ; une sonde d'un niveau bas de liquide dans l'enceinte ; un conduit d'évacuation sur lequel est installé, d'amont en aval, un moyen de contrôle de débit et un moyen d'exposition du fluide évacué à un rayonnement lumineux ; un circuit électronique de commande de l'électrovanne et du moyen de contrôle de débit, soumis aux sondes de niveaux.

Selon l'invention, le moyen de contrôle de débit peut comprendre une pompe et une électrovanne.

Selon l'invention, le dispositif de traitement peut comprendre une sonde d'un niveau bas intermédiaire.

Selon l'invention, le dispositif de traitement peut comprendre un conduit de trop plein dont l'entrée est au-dessus du niveau haut et reliée directement à l'entrée du moyen d'exposition.

Selon l'invention, l'enceinte peut être munie d'un clapet anti-retour autorisant l'entrée d'air.

Selon l'invention, les sondes peuvent être fixées sur une paroi supérieure de l'enceinte et comprennent des tiges qui s'étendent verticalement.

Selon l'invention, le moyen d'exposition peut comprendre au moins deux tubes cylindriques coaxiaux définissant un canal de traitement dans lequel le liquide évacué peut circuler approximativement longitudinalement et au moins une lampe à un rayonnement lumineux qui s'étend longitudinalement dans le tube intérieur.

La présente invention sera mieux comprise à l'étude d'un dispositif de traitement des effluents et de son fonctionnement, décrits à titre d'exemples non limitatifs et illustrés par le dessin sur lequel :
La figure 1 représente une coupe longitudinale, selon I-I de la figure 2, d'un dispositif de traitement selon l'invention ;
La figure 2 représente une coupe transversale selon II-II du dispositif de traitement de la figure 1 ;
La figure 3 représente une coupe horizontale selon III-III du dispositif de traitement de la figure 1, sous l'enceinte ;
Et la figure 4 représente un circuit électronique de commande associé.

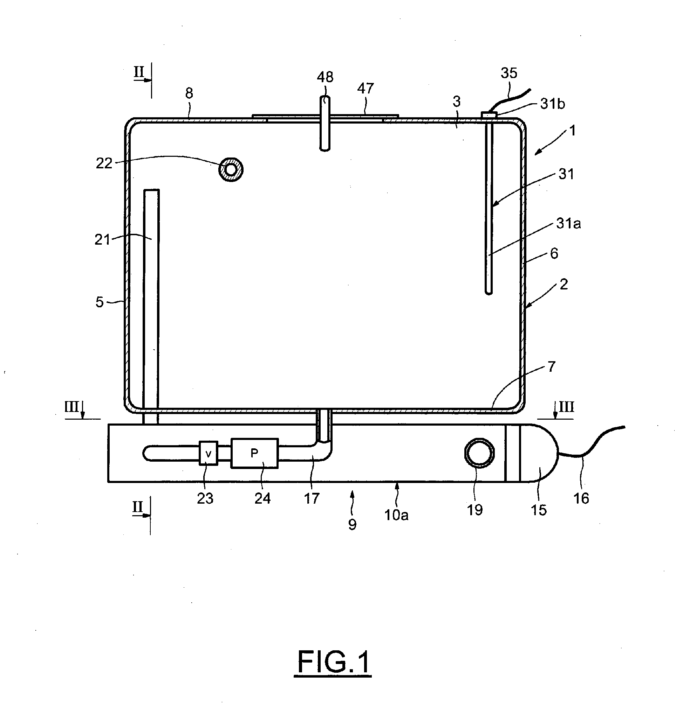

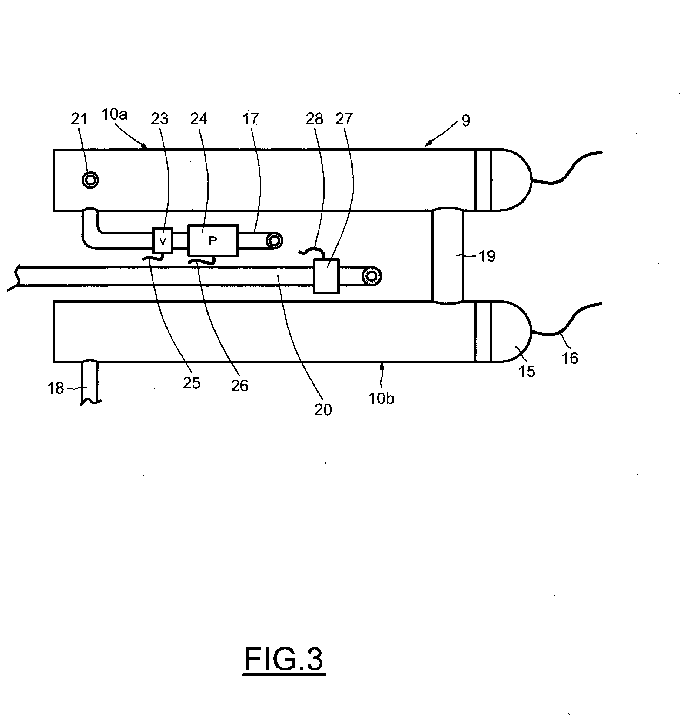

Le dispositif 1 de traitement des effluents liquides représenté sur les figures 1 à 3 comprend une enceinte métallique parallélépipédique 2 qui présente des parois longitudinales 3 et 4, des parois transversales 5 et 6, une paroi inférieure ou fond 7 et une paroi supérieure 8.

Placé au-dessous de l'enceinte 2, le dispositif de traitement 1 comprend un moyen de traitement 9 qui comprend deux organes longitudinaux 10a et 10b de traitement, de chaque côté de la paroi inférieure 7, montés en série.

Les organes de traitement comprennent respectivement un tube extérieur métallique 11 et un tube coaxial 12 transparent, en quartz, définissant entre eux un canal annulaire d'exposition 13 et une lampe longitudinale 14 à rayonnement lumineux ultraviolet qui s'étend en porte-à-faux dans le tube intérieur 12 et qui est portée par un bouchon d'extrémité 15 duquel part un fil d'alimentation 16.

L'une des extrémités latérales de l'organe d'exposition 10a est reliée au fond 7 de l'enceinte 1 par un conduit 17 de telle sorte que son canal annulaire d'exposition 13 communique avec l'enceinte 2, sensiblement en son milieu.

L'extrémité correspondante de l'organe de traitement 10b est munie d'un conduit latéral d'évacuation 18 pour relier par écoulement naturel son canal annulaire d'exposition 13 par exemple à un réseau d'eaux usées.

Les autres extrémités des organes de traitement 10a et 10b sont reliées latéralement, par un conduit transversal 19 mettant en communication et en série leurs canaux annulaires d'exposition 13.

Sous l'enceinte 2, le dispositif de traitement 1 comprend un conduit 20 d'amenée d'un liquide de dilution dans l'enceinte 2 au travers de sa paroi inférieure 7, ce conduit 20 étant par exemple relié à un réseau d'eau sanitaire sous pression.

Le dispositif de traitement 1 comprend également un conduit vertical de trop-plein 21 qui s'étend verticalement dans l'enceinte 2, qui traverse le fond 7 de cette dernière et qui est branché sur l'extrémité de l'organe de traitement 10a correspondant à l'extrémité de branchement du conduit 17. L'extrémité supérieure du conduit de trop plein 21 est localisée dans la partie supérieure de l'enceinte 2.

La paroi 3 de l'enceinte 2 est munie d'un conduit 22 d'amenée d'un effluent à traiter.

Sur le conduit 17 sont prévues une électrovanne 23 et une pompe 24, desquelles partent des fils de raccordement électrique 25 et 26.

Sur le conduit 20 est prévue une électrovanne 27 de laquelle part un fil de raccordement électrique 28.

Le dispositif de traitement 1 comprend quatre sondes de niveau 29, 30, 31 et 32 qui plongent dans l'enceinte 2 à partir de sa paroi supérieure 8 et qui présentent respectivement des tiges 29a, 30a, 31 a et 31a et des rondelles 29b, 30b, 31b et 32b fixées sur la face extérieure de la paroi supérieure 8 de façon amovible par exemple par l'intermédiaire de vis, les sondes étant munies de fils de connexion électrique 33, 34, 35 et 36.

L'extrémité inférieure de la tige 29a de la sonde 29 définit un niveau bas 42 dans l'enceinte 2.

L'extrémité inférieure de la tige 30a de la sonde 30 définit un niveau bas intermédiaire 38 dans l'enceinte 1.

L'extrémité inférieure de la tige 31 a de la sonde 31 définit un niveau intermédiaire 39 dans l'enceinte 1.

L'extrémité inférieure de la tige 32a de la sonde 32 définit un niveau haut 40 dans l'enceinte 1, qui est situé légèrement au-dessous d'un niveau 41 de trop plein défini par l'extrémité supérieure du conduit de trop plein 21.

Le conduit d'amenée d'effluent 22 est placé de façon à déboucher dans l'enceinte 2 à un niveau supérieur au niveau de trop plein 41.

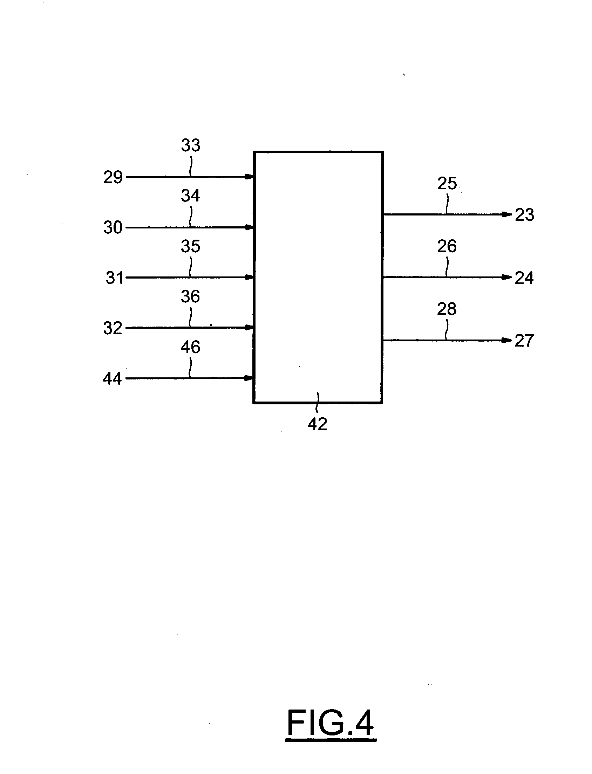

Comme le montre la figure 4, le dispositif de traitement 1 comprend par ailleurs un circuit électronique 42 qui est relié aux sondes de niveau 29, 30, 31 et 32 par les fils de connexion électrique 33, 34, 35 et 36 et qui est relié aux électrovannes 23 et 27 par les fils de connexion électrique 25 et 28 et à la pompe 24 par le fil de connexion électrique 26.

Par ailleurs, les lampes 14 sont reliées au circuit électronique 42 en vue de leur alimentation électrique.

Le circuit électronique 42 est programmé de manière à faire fonctionner le dispositif de traitement 1 de la manière suivante.

On suppose que le circuit électronique 42 est en marche et que les lampes 14 sont allumées.

Au démarrage, le circuit électronique 42 commande l'ouverture de l'électrovanne 27 pour amener du liquide de dilution dans l'enceinte 2.

Lorsque le niveau du liquide dans l'enceinte 2 atteint le niveau bas intermédiaire 38, le circuit électronique 42 commande la fermeture de l'électrovanne 27.

L'effluent amené dans l'enceinte 2 par le conduit d'amenée 22 remplit cette enceinte petit à petit et se mélange au liquide de dilution.

Lorsque le niveau du liquide dans l'enceinte 2 atteint le niveau intermédiaire 39, la sonde 26 détecte ce niveau et envoie un signal correspondant au circuit électronique 42. Ce dernier ordonne alors l'ouverture de l'électrovanne 27 pour introduire dans l'enceinte 2 le liquide de dilution.

Lorsque le liquide contenu dans l'enceinte 2 atteint le niveau haut 40, la sonde 27 détecte ce niveau et transmet un signal correspondant au circuit électronique 42 qui commande la fermeture de l'électrovanne 27, puis l'ouverture de l'électrovanne 23 et la mise en marche de la pompe 24.

Le liquide contenu dans l'enceinte 2 est alors évacué de l'enceinte 2 via le conduit 17, le canal 13 de l'organe 10a, le conduit de liaison 19, le canal 13 de l'organe 10b et enfin le conduit terminal 18.

Lorsque le niveau de liquide dans l'enceinte 2 atteint le niveau bas 37, le circuit électronique 42 commande l'arrêt de la pompe 24 et la fermeture de l'électrovanne 23, avec un décalage d'une durée déterminée telle que le niveau du liquide dans l'enceinte 2 atteint un niveau bas inférieur 43 proche de la paroi inférieure 7 ou est complètement évacué.

Puis, le circuit électronique 42 commande l'ouverture de l'électrovanne 27 de façon à assurer une amenée secondaire du liquide de dilution dans l'enceinte 2.

Lorsque le niveau du liquide de dilution atteint le niveau bas intermédiaire 38, le circuit électronique 42 commande la fermeture de l'électrovanne 27.

Par apport d'effluent dans l'enceinte 2, le niveau de liquide contenu dans cette enceinte monte et, le cycle qui vient d'être décrit recommence à partir du niveau 38.

Lorsque le liquide évacué de l'enceinte 2 traverse les canaux d'exposition 13 des organes de traitement 10a et 10b, il subit un traitement de décontamination par exposition aux rayonnements lumineux ultraviolets des lampes 14.

Selon une variante, les lampes 14 peuvent être en permanence allumées.

Selon une autre variante plus économique, à la détection du niveau intermédiaire 39, le circuit électronique 42 commande l'allumage des lampes 14 et, lorsque le niveau bas 43 est atteint, le circuit électronique 42 commande l'arrêt des lampes 14. Bien entendu, la durée de l'amenée du fluide de dilution faisant passer le niveau du niveau intermédiaire 39 au niveau haut 40 doit être suffisante pour la chauffe des lampes 14. Pour cela, la durée de l'amenée du fluide de dilution peut être réglée par un réglage de l'électrovanne 27 ou par la prévision d'un limiteur de débit sur le conduit d'amenée 20.

Par ailleurs, le dispositif de traitement peut comprendre une sonde de sécurité 44 comprenant une tige verticale 44a et une rondelle 44b de montage sur la paroi 8 et définissant un niveau de sécurité 45 situé entre le niveau haut 40 et le niveau 41 de trop plein, cette sonde de sécurité 44 étant reliée au circuit électronique 42 par une ligne 46.

Lorsque le fluide dans l'enceinte 2 atteint le niveau de sécurité, le circuit électronique 42 peut déclencher une alarme sonore et/ou lumineuse et provoquer un arrêt forcé de l'électrovanne 27.

Le dispositif de traitement qui vient d'être décrit présente les avantages suivants.

L'apport d'un liquide de dilution entre les niveaux 39 et 40 permet une dilution de l'effluent et en conséquence un traitement plus efficace au travers des organes 10a et 10b.

La pompe 24 permet un contrôle du débit d'évacuation du liquide et assure ainsi une durée d'exposition contrôlée dans les organes 10a et 10b.

Le circuit électronique 42 peut être programmé pour régler l'actionnement de la pompe 24 de façon à assurer des débits différents adaptés à l'effluent à traiter.

Du fait de leur mode de montage, les sondes 29 à 32 peuvent être changées, indépendamment les unes des autres de façon à définir des niveaux associés différents, par exemple en fonction de l'effluent à traiter.

En particulier, la sonde 31 peut être interchangée de façon à adapter le niveau intermédiaire à l'effluent à traiter. Comme on l'a vu plus haut, c'est cette sonde 31 qui détermine le taux de dilution, en fonction des positions relatives du niveau intermédiaire 39, du niveau haut 40 et du niveau bas 43.

En effet, il convient d'adapter le taux de dilution défini par les sondes 39, 40 et 43 et le débit d'évacuation défini par la pompe 24 pour que le traitement de l'effluent à traiter soit le plus efficace possible et détruise les polluants. Il peut être observé qu'en fonction des effluents à traiter, le taux de dilution, défini comme étant un rapport entre le volume d'eau ajouté entre les niveaux 39 et 40 et le volume d'effluent déversé dans l'enceinte entre les niveaux 38 et 39, peut être compris entre 0 et 50, plus particulièrement entre 0,2 et 30.

Si le niveau de liquide dans l'enceinte 2 dépasse le niveau haut 40 et atteint le niveau supérieur 41, le trop-plein est évacué par le conduit de trop plein 21 directement au travers des organes 10a et 10b, sans passer par le conduit 17 soumis à l'électrovanne 23 et à la pompe 24, tout en subissant le traitement de décontamination au travers de ces organes 10a et 10b sous l'effet des lampes 14.

L'existence d'un niveau bas inférieur 38 et d'apports de liquide de dilution assure substantiellement un nettoyage des extrémités des sondes.

Par ailleurs, le circuit électronique 42 peut être programmé pour exécuter en outre des cycles de traitement imposés à des moments prédéterminés, éventuellement réglables, par exemple toutes les trois ou quatre heures, ce pour le cas où la quantité d'effluent admise dans l'enceinte 2 se raréfierait. Dans ce cas, le circuit électronique 42 commanderait l'apport du fluide de dilution jusqu'au niveau haut 40 même si le niveau dans l'enceinte serait inférieur au niveau intermédiaire 39, puis l'évacuation, comme décrit précédemment.

Un cycle de traitement imposé pourrait également être prévu en cas de coupure du courant, dès le retour de ce dernier.

Comme le montre la figure 1, la paroi 8 de l'enceinte 2 peut présenter une trappe de visite 47 portant un clapet anti-retour 48 permettant une entrée d'air dans l'enceinte 2 en évitant un rejet des gaz contenus dans l'enceinte vers l'extérieur.

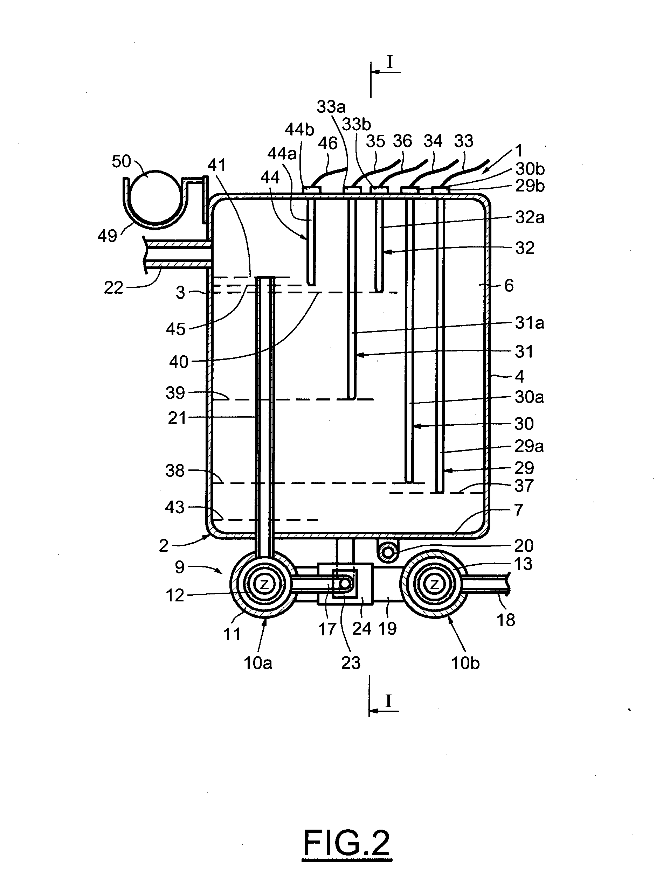

Comme le montre la figure 2, la paroi 3 de l'enceinte 2 peut être munie d'un support extérieur horizontal 49 pour la réception d'une cartouche 50 de traitement chimique et/ou de filtrage de l'effluent, avant que l'effluent ne soit amené dans l'enceinte 2, cette cartouche étant placée au dessus du niveau de l'entrée 22 pour éviter une remontée de l'effluent.

## Revendications

1. Procédé de traitement d'un effluent liquide, dans lequel cet effluent entre dans une enceinte, comprenant, séquentiellement, les étapes suivantes :
détecter un niveau intermédiaire (39) de liquide dans l'enceinte ;
à la détection du niveau intermédiaire, commander une amenée d'un liquide de dilution dans l'enceinte ;
détecter un niveau haut (40) de liquide dans l'enceinte ;
à la détection du niveau haut, arrêter l'amenée du liquide de dilution et commander une évacuation du fluide ;
détecter un niveau bas (37) de liquide dans l'enceinte ;
à ou suite à la détection du niveau bas, arrêter l'évacuation du liquide ;
et, au cours de son évacuation, exposer, dans au moins un canal de traitement (13), le liquide évacué à un rayonnement lumineux.

2. Procédé de traitement selon la revendication 1, comprenant l'étape suivante : évacuer, par le canal de traitement, le liquide à un niveau de trop plein (41) supérieur au niveau haut (40) et exposer le liquide de trop plein au rayonnement lumineux.

3. Procédé de traitement selon l'une des revendications 1 et 2, comprenant les étapes suivantes : commander une amenée secondaire du liquide de dilution dans l'enceinte à partir d'un niveau bas ;
détecter un niveau bas intermédiaire (38) de liquide dans l'enceinte ;
à la détection du niveau bas intermédiaire, arrêter l'amenée secondaire du liquide de dilution.

4. Procédé de traitement selon l'une quelconque des revendications précédentes, dans lequel l'arrêt de l'évacuation du liquide est décalé d'une durée déterminée par rapport à la détection du niveau bas.

5. Dispositif de traitement d'un effluent liquide, comprenant :
une enceinte (2),
un conduit (22) d'amenée de l'effluent liquide à traiter,
un conduit d'amenée (20) d'un liquide de dilution sous pression, muni d'une électrovanne,
une sonde (32) d'un niveau haut de liquide dans l'enceinte,
une sonde (31) d'un niveau intermédiaire de liquide dans l'enceinte,
une sonde d'un niveau bas (29) de liquide dans l'enceinte,
un conduit d'évacuation (17) sur lequel est installé, d'amont en aval, un moyen de contrôle de débit (23, 24) et un moyen (9) d'exposition du fluide évacué à un rayonnement lumineux,
un circuit électronique (42) de commande de l'électrovanne et du moyen de contrôle de débit, soumis aux sondes de niveaux.

6. Dispositif de traitement selon la revendication 5, dans lequel le moyen de contrôle de débit comprend une pompe et une électrovanne.

7. Dispositif de traitement selon l'une des revendications 5 et 6, comprenant une sonde (30) d'un niveau bas intermédiaire.

8. Dispositif de traitement selon l'une quelconque des revendications 5 à 7, comprenant un conduit de trop plein (21) dont l'entrée est au-dessus du niveau haut et relié directement à l'entrée du moyen d'exposition (9).

9. Dispositif de traitement selon l'une quelconque des revendications 5 à 8, dans lequel l'enceinte est munie d'un clapet anti-retour (45) autorisant l'entrée d'air.

10. Dispositif de traitement selon l'une quelconque des revendications 5 à 9, dans lequel les sondes sont fixées sur une paroi supérieure (8) de l'enceinte et comprennent des tiges qui s'étendent verticalement.

11. Dispositif de traitement selon l'une quelconque des revendications 5 à 10, dans lequel le moyen d'exposition comprend au moins deux tubes cylindriques coaxiaux (11, 12) définissant un canal de traitement (13) dans lequel le liquide évacué peut circuler approximativement longitudinalement et au moins une lampe (14) à un rayonnement lumineux qui s'étend longitudinalement dans le tube intérieur.

## Patentansprüche

1. Verfahren zur Behandlung eines Austragsstroms, wobei dieser Austragsstrom in einen Behälter strömt, umfassend nacheinander die folgenden Schritte:
ein Zwischenniveau (39) der Flüssigkeit in dem Behälter erfassen;
beim Erfassen des Zwischenniveaus das Zuführen einer Verdünnungsflüssigkeit in den Behälter veranlassen;
ein hohes Niveau (40) der Flüssigkeit in dem Behälter erfassen;
beim Erfassen des hohen Niveaus das Zuführen der Verdünnungsflüssigkeit stoppen und ein Auslassen der Flüssigkeit veranlassen;
ein niedriges Niveau (37) der Flüssigkeit in dem Behälter erfassen;
bei oder nach dem Erfassen des niedrigen Niveaus das Auslassen der Flüssigkeit stoppen;
und die ausgelassene Flüssigkeit während ihres Auslassens mindestens in einem Behandlungskanal (13) einer Lichtstrahlung aussetzen.

2. Verfahren zur Behandlung nach Anspruch 1, umfassend den folgenden Schritt: die Flüssigkeit durch den Behandlungskanal bei einem Überlaufniveau (41) auslassen, das höher als das hohe Niveau (40) ist, und die Überlaufflüssigkeit der Lichtstrahlung aussetzen.

3. Verfahren zur Behandlung nach einem der Ansprüche 1 und 2, umfassend die folgenden Schritte: ein sekundäres Zuführen der Verdünnungsflüssigkeit in den Behälter von einem niedrigen Niveau aus veranlassen;
ein niedriges Zwischenniveau (38) der Flüssigkeit in dem Behälter erfassen;
beim Erfassen des niedrigen Zwischenniveaus das sekundäre Zuführen der Verdünnungsflüssigkeit stoppen.

4. Verfahren zur Behandlung nach einem der vorhergehenden Ansprüche, wobei das Stoppen des Auslassens der Flüssigkeit um eine Zeitdauer verschoben wird, die in Bezug auf das Erfassen des niedrigen Niveaus bestimmt wird.

5. Vorrichtung zur Behandlung eines Austragsstroms, umfassend:
einen Behälter (2),
eine Leitung (22) zum Zuführen des zu behandelnden Austragsstroms,
eine Leitung zum Zuführen (20) einer Verdünnungsflüssigkeit unter Druck, die mit einem Elektroventil versehen ist,
eine Sonde (32) eines hohen Niveaus der Flüssigkeit in dem Behälter,
eine Sonde (31) eines Zwischenniveaus der Flüssigkeit in dem Behälter,
eine Sonde eines niedrigen Niveaus (29) der Flüssigkeit in dem Behälter;
eine Abflussleitung (17), an der vorgelagert ein Mittel zur Kontrolle des Durchsatzes (23, 24) und nachgelagert ein Mittel (9) zum Aussetzen der ausgelassenen Flüssigkeit einer Lichtstrahlung installiert ist,
eine elektronische Schaltung (42) zum Steuern des Elektroventils und des Mittels zur Kontrolle des Durchsatzes, die den Füllstandsonden unterliegt.

6. Vorrichtung zur Behandlung nach Anspruch 5, wobei das Mittel zur Kontrolle des Durchsatzes eine Pumpe und ein Elektroventil aufweist.

7. Vorrichtung zur Behandlung nach einem der Ansprüche 5 und 6, umfassend eine Sonde (30) eines niedrigen Zwischenniveaus.

8. Vorrichtung zur Behandlung nach einem der Ansprüche 5 bis 7, umfassend eine Überlaufleitung (21), deren Eingang sich über dem hohen Niveau befindet, und die direkt mit dem Eingang des Belichtungsmittels (9) verbunden ist.

9. Vorrichtung zur Behandlung nach einem der Ansprüche 5 bis 8, wobei der Behälter mit einem Rückschlagventil (45) ausgestattet ist, das das Eintreten von Luft genehmigt.

10. Vorrichtung zur Behandlung nach einem der Ansprüche 5 bis 9, wobei die Sonden an einer oberen Wand (8) des Behälters befestigt sind und Stäbe aufweisen, die sich vertikal erstrecken.

11. Vorrichtung zur Behandlung nach einem der Ansprüche 5 bis 10, wobei das Belichtungsmittel mindestens zwei koaxiale zylindrische Rohre (11, 12), die einen Behandlungskanal (13) definieren, in dem die ausgelassene Flüssigkeit annähernd in Längsrichtung fließen kann, und mindestens eine Lampe (14) mit einer Lichtstrahlung aufweist, die sich in Längsrichtung in dem inneren Rohr erstreckt.

## Claims

1. Method of treating a liquid effluent, in which this effluent enters a vessel comprising, in sequence, the following steps:
detecting an intermediate level (39) of liquid in the vessel;
upon detection of the intermediate level, instigating an influx of a dilution liquid into the vessel;
detecting a high level (40) of liquid in the vessel;
upon detection of the high level, stopping the influx of dilution liquid and instigating a discharge of the fluid;
detecting a low level (37) of liquid in the vessel;
upon or following detection of the low level, stopping the discharge of the liquid;
and, while it is being discharged, exposing the discharged liquid to light radiation in at least one treatment channel (13).

2. Treatment method according to Claim 1, comprising the following step: discharging, via the treatment channel, any liquid that is at an overflow level (41) above the high level (40) and exposing the overflow liquid to light radiation.

3. Treatment method according to either of Claims 1 and 2, comprising the following steps: instigating a secondary influx of dilution liquid into the vessel from a low level;
detecting an intermediate low level (38) of liquid in the vessel;
upon detection of the intermediate low level, stopping the secondary influx of dilution liquid.

4. Treatment method according to any one of the preceding claims, in which the stopping of the discharge of the liquid is offset by a set length of time in relation to the detection of the low level.

5. Device for treating a liquid effluent, comprising:
a vessel (2);
an influx pipe (22) carrying the liquid effluent that is to be treated;
an influx pipe (20) carrying a dilution liquid under pressure and fitted with an electrically operated valve;
a probe (32) sensing a high level of liquid in the vessel;
a probe (31) sensing an intermediate level of liquid in the vessel;
a probe (29) sensing a low level of liquid in the vessel;
a discharge pipe (17) on which there are installed, from the upstream direction downstream, a flow regulating means (23, 24) and a means (9) of exposing the discharged fluid to light radiation;
an electronic circuit (42) for controlling the electrically operated valve and the flow regulating means and subject to the signals from the level probes.

6. Treatment device according to Claim 5, in which the flow regulating means comprises a pump and an electrically operated valve.

7. Treatment device according to either of Claims 5 and 6, comprising a probe (30) that senses an intermediate low level.

8. Treatment device according to any one of Claims 5 to 7, comprising an overflow pipe (21) the inlet of which is situated above the high level and which is connected directly to the inlet of the exposure means (9).

9. Treatment device according to any one of Claims 5 to 8, in which the vessel is fitted with a nonreturn valve (45) that allows air to enter.

10. Treatment device according to any one of Claims 5 to 9, in which the probes are fixed to an upper wall (8) of the vessel and comprise stems which run vertically.

11. Treatment device according to any one of Claims 5 to 10, in which the exposure means comprises at least two coaxial cylindrical tubes (11, 12) defining a treatment channel (13) in which the discharged liquid can flow approximately longitudinally and at least one lamp (14) emitting light radiation which runs longitudinally along the inner tube.
